# EUROPEAN PATENT SPECIFICATION

(11) **EP 3 194 312 B1**
(45) Date of publication and mention of the grant of the patent: **12.02.2020**
(21) Application number: 15759545.5
(22) Date of filing: 06.08.2015
(51) Int. Cl.: B65G 57/24, B65G 47/51

(54) **IMPROVED APPARATUS FOR AUTOMATICALLY PALLETIZING CONTAINERS AND RESPECTIVE METHOD**
VERBESSERTE VORRICHTUNG ZUR AUTOMATISCHEN PALETTIERUNG VON BEHÄLTERN UND ENTSPRECHENDES VERFAHREN
APPAREIL AMÉLIORÉ DESTINÉ À PALETTISER AUTOMATIQUEMENT DES RÉCIPIENTS ET PROCÉDÉ RESPECTIF

(30) Priority: 08.08.2014 IT PN20140040
(43) Date of publication of application: 26.07.2017
(73) Proprietor: Unitec S.p.A., 48022 Lugo (IT)
(72) Inventor: BENEDETTI, Luca, I-48123 Savarna (RA) (IT)
(74) Representative: Gonella, Mario
(86) International application number: PCT/IB2015/055959
(87) International publication number: WO 2016/020865

(56) References cited:
- WO-A1-2012/156355
- DE-A1- 4 238 341
- DE-U1- 9 211 262
- ES-A1- 2 409 459
- JP-A- 2001 106 338

## Description

The present invention relates to an improved automatic apparatus for loading single *"pallets",* (the term is worldwide known and therefore it will be used without any further details) successively ready to be loaded with a plurality of containers or "mosaics" (the term will be explained later); these containers and/or mosaics are loaded in layers that is on overlapping planes and of course loaded in succession, so that a lower layer is the support base for the upper layer.

Hereinafter the term "plane" will be used to identify a general horizontal plane whereon a respective layer of containers/mosaic is supported.

Furthermore, the invention relates to the respective operating method.

The invention relates in particular to the handling and loading, on respective pallets, containers, especially cases, loaded according to different procedures depending on both the type of product being collected, and on the characteristics of the same containers.

Hereinafter, for a greater compliance with the object of the invention, it will be assumed that such containers contain vegetable products or in general horticultural products, but being understood that the invention is applicable and can be used for loading, on respective pallets, containers carrying materials/products of a completely different kind.

It is known that, in particular in the sector of loading pallets with cases/containers containing vegetable/fruit on layers or overlapping planes, the quantity of products and hence the respective cases to realise and transport is very high, and their handling techniques are rather standardised; the methods for handling and transporting such cases have in common both the way in which such cases are made ready to be transported, and the way in which they are grouped together and finally transported.

As for the way with which such cases are made ready to be transported, it consists in loading a succession, also not continuous and at not predetermined intervals of single cases to be transported on a mobile conveyor that can be a belt, catenary or roller conveyor of a conventional type and universally known.

Regarding instead the way with which said cases are assembled and readied to be transported, the most efficient and common way consists in loading a plurality of said cases on a respective pallet, thus said cases are arranged on overlapping planes or layers so as to optimise the utilization of each pallet; moreover, even if each of said layers can be formed by only one case, if the reciprocal sizes of said pallets and said cases allow that, each of said layers is generally formed by more cases arranged on the same layer so as to optimise the usable surface of the respective pallet.

In order to load said cases on the respective pallets, machines or specific apparatuses known as "palletizers" are generally used.

Such apparatuses are made according to very varied ways depending on the constraints and conditions wherein they have to operate.

From patent US 5,135,351 it is known an apparatus for palletizing and depalletizing a plurality of homogeneous loads, each one typically consisting of a single stack of flat and thin products, such as sheets of paper or in general printed publications, stacked in succession and vertically one by one on a sole pallet.

To this purpose, single stacks of such flat and thin products are each one of them loaded on a respective intermediate plane (called "intercarrier 2") and subsequently each load, consisting of a respective intermediate plane, supporting a respective stack of products is stacked one by one, by means of moving the respective intermediate plane.

The object of such patent is not that of forming a pallet rapidly and efficiently so as to move it onto a means of transport to send it away, but to make it possible that the various stacks can be formed in an ordered, and above all, stable and safe way, so as to avoid the risk of collapsing of part of the various loads stacked one on top of the other on the same pallet; but above all, this patent allows to depalletize the various single loads, by means of a method for "undoing" in an ordered and safe way the overall load, comprising the various intermediate planes and the respective stacks resting on a same pallet.

Basically the apparatus described therein discloses a palletizer of an improved type for the particular use as a means for storing and retrieving in an ordered and safe way documents and the like, and it does have any advantages as a means and method for forming pallets that have to be rapidly and efficiently loaded with a great amount of containers coming from different origins, such as different conveyors or mobile planes.

From patent DE 3107495 it is known another apparatus for palletizing apt at loading in succession and totally automatically a plurality of single containers (Zusnittelstapel 1) on a respective pallet; after the loading of the pallet, this one is moved away and its place is taken by a successive pallet whereon the same loading operation is repeated.

Anyway, even if the optimization of the area on the pallet is achieved forming a suitable "mosaic" of single containers, there is still the inconvenience that the palletizer is fixed and can only work with only one conveyor, and therefore it necessarily affected by inevitable slowing down or discontinuity of the feeding of products coming from the sole mobile conveyor.

It is specified that in the present description with the term "mosaic" it is meant the assembly of more containers arranged and oriented, and associated with respect to one another on a same horizontal plane and that together they constitute the overall load forming a single common load layer on the same pallet.

Further, that palletizer is capable of loading only a single layer (or "mosaic") of containers on the same pallet, and therefore it is not capable of loading, in an optimal way, a same pallet to its highest capacity, that is on more overlapping layers.

From patent US 5,297,924 it is known an overall apparatus for palletizing and transferring a plurality of already formed and loaded pallets; this apparatus is capable of transferring a sequence of bodies also having very different sizes, incoming from a conveyor, to a plurality of pallets each of which is arranged on a loading area of a respective outgoing conveyor.

In order to transfer the various bodies from the incoming conveyor towards and on various outgoing pallets, it is used a rotating transferring means which, suitably associated with rails allowing its horizontal displacement and according to a rectilinear route, is made able to access both the collecting area of the incoming conveyor, and to carry the various bodies on a respective pallet arranged in the loading area of pallets on a respective outgoing conveyor.

In particular the patent aims at a method for automatically feeding pallets on the loading areas of respective outgoing conveyors so as to make the apparatus completely automatic and highly flexible.

Even though it has to be recognized that the presence of a sole palletizing means (transfer device 52, self propelled robot 54) combined with guide rails improves the efficiency and the overall performances of the whole apparatus since said palletizing means is single but multi-purpose, yet it has to be observed that such apparatus is particularly meant for a sector typical of the "large-scale retail trade", and therefore it is capable of neither loading the single pallets with more overlapping layers of products, nor of loading on a single pallet an organized mosaic of products whose horizontal dimensions are compatible with the optimization of the surface offered by each single pallet.

Document DE 42 38 341 A1 discloses an apparatus for loading a plurality of containers on pallets, comprising: a first assembly consisting of a palletizer comprising an articulated frame and a plate; a second assembly comprising a conveyor having a horizontal motion, a handling and collecting group, a transferring device and an open multi-flat structure; wherein said handling and collecting group is arranged downstream said conveyor and is provided with a leaning plane able of supporting one or more containers transferred in sequence by said conveyor, the apparatus being provided with suitable means adapted to arrange said one or more containers to form, in succession, one mosaics of containers; wherein said open multi-flat structure is arranged substantially adjacent to said handling and collecting group and is able of accumulating into a vertical standing, for a pre-determined quantity, said containers, and successively of transferring them in sequence and singularly towards and into said palletizer; wherein said open multi-flat structure comprises a plurality of basically similar leaning planes placed vertically one by one, and separated by respective hollow spaces, lifting/lowering means able of vertically displacing the position of said leaning planes to a plurality of selectively defined levels and in a selectively controllable sequence, wherein at each level a defined of said hollow spaces is so arranged in height substantially to the same level of said leaning plane of said handling and collecting group; wherein said first assembly is adapted to serve and to operate in coordination with said at least a second assembly; wherein said articulated frame is able of selectively conveying with horizontal and vertical motion said plate, wherein the apparatus comprises a pusher able of transferring, in sequence, said mosaics of containers towards and on said plate; wherein said palletizer further comprises retaining means consisting of a vertical wall; and wherein said lifting/lowering means are able of implementing the raising of said leaning planes in sequence.

It would therefore be desirable, and it is the main object of the present invention, to realize a type of apparatus which overcomes the described inconveniences and in particular which offers the possibility and advantages of:
- using a sole palletizer means that serves and palletizes the containers coming from distinct mobile conveyors and fed with containers in an independent and casual way, in order to form a suitable mosaic of containers before these are loaded on the same pallet, and realize a succession of said mosaics,
- loading each one of the succession of said mosaics on more overlapping layers on the same pallet, so as to form a stack,
- and in particular providing storage means associated with incoming conveyors so as to form corresponding complete loads of mosaics before the latter are transferred on various pallets using a sole means of palletizing for a time interval strictly necessary to transfer the whole complete load on a respective pallet.

Such object, and others which will be better described hereinafter, will be achieved by an apparatus according to claim 1 for loading a plurality of containers on pallets. In the following, the present invention will be described in more detail with reference to the appended figures in which:
- figure 1 shows a prospective view of a simplified and symbolic representation of the apparatus of the invention,
- figures from 1A to 1H show respective plan views and top views of a schematic representation of likewise operating steps of an apparatus according to the invention,
- figure 2 shows a prospective view of an assembly composing the apparatus of the previous figures, in a main step of its operation,
- figure 3 shows an exemplificative and schematic view of a portion of the assembly of figure 2,
- figure 4 shows a side vertical plan view and in a simplified form of the apparatus of the previous figures seen from the observation plane "K" of figure 1A,
- figures 5, 6 and 7 show likewise vertical plan views, similar to figure 4, in different and subsequent respective operating steps,
- figures 8, 9 and 10 show likewise views of an assembly composing the apparatus of the invention, in respective operating states,
- figure 11 shows a top plan view of a form of improved and expanded embodiment of the apparatus of the previous figures, in a definite operating state,
- figure 12 shows a top plan view of the apparatus of figure 11, in a different operating state.

The invention is defined by the independent claim. Embodiments of the invention will be apparent from the dependent claims.

With reference to figures, an apparatus for palletizing a plurality of containers 30 available in a sequential way comprises:
- at least a conveyor 1, and in general a mobile conveyor known *per se,* for example operating with a roller, or a catenary etc. running on a horizontal plane with a closed ring motion,
- a handling and ordered collecting group 2 arranged downstream said closed conveyor 1, and provided with a leaning plane able of supporting a respective container or a plurality of containers,
- at least an open structure 3 arranged downstream and accessible by the containers arranged on said handling and collecting group 2.

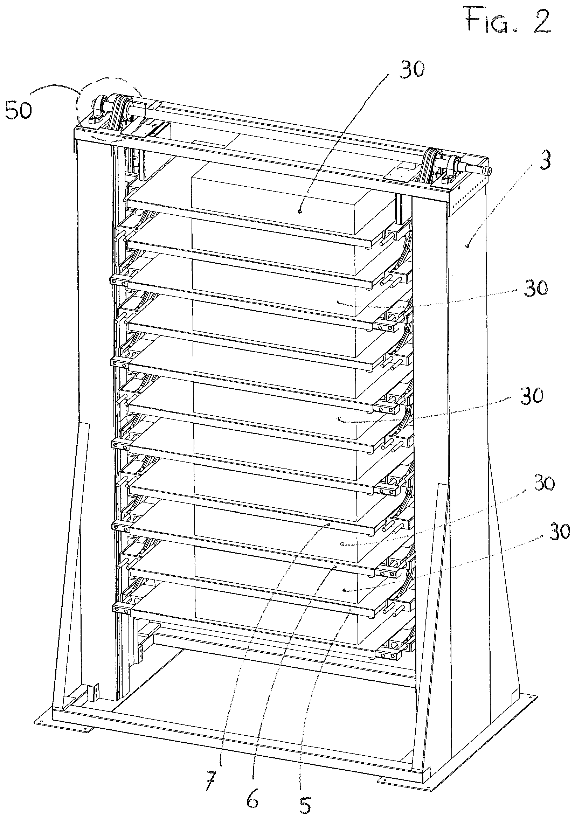

The fundamental content of the invention is based on the nature and operation of said open structure 3; its function is that of being a temporary vertical storing means such as a vertical storage unit (BUFFER), provided with a plurality of leaning distinct planes, basically rigid, 5, 6, 7, 8... and overlapping one another but separated one from the other so as to form, if said planes 5, 6, 7, 8... are rectangles, a parallelogram-like structure, as shown in figures 2, 3, 8, 9, 10.

It must be said beforehand that, even though this aspect will be better explained and analysed later, said rigid planes 5, 6, 7, 8... can be either separated one from the other or, during one of their operating step, they can also be moved into contact one with the other, roughly similar to a stack of planes overlapping one another.

Since said planes are at first separated one from the other, between each pair of contiguous and overlapping planes, of course, there will be formed a respective hollow space 5A, 6A, 7A...

Said parallelogram-like structure is completed, for its stabilization as a solid body, by four vertical posts applied at the corners of said rigid planes 5, 6, 7, 8... so that, after such completion and stabilization, said open multi-flat structure 3 is as in figures 2, 9, 10, and that is, it is as an open multi-flat structure, provided with said rigid planes 5, 6, 7, 8... between which there are interposed respective said hollow spaces 5A, 6A, 7A...

Said multi-flat structure 3 is provided with lifting means, not shown, apt at lifting and lowering it selectively, and with modes and sequence which will be described hereinafter in detail.

At this point a clarification is necessary: generally on each pallet it is loaded a plurality of layers of containers in succession and vertically, and leaning one on the other; generally each layer contains not only one container, but a respective plurality of containers, so as to optimise the pallet useful surface.

The modes with which the various containers are managed, arranged and loaded so as to form an assembly which becomes a single layer of containers, also called *"mosaic"* are well known to the skilled in the art and therefore they are not included in the present invention.

Therefore hereinafter it will be meant that when it is described in general the motion of *"containers"* it can be indifferently referred to either a single container or to a respective said *"mosaic"* comprising said container and all the others comprised in the respective mosaic, if present.

In the embodiment of the present invention it is meant that said *"mosaic"* is formed on said handling and ordered collecting group 2, by means of a suitable operation of the associated elements to said same group 2 and that typically are formed by:
- one or more roller conveyors
- and one or more pushers.

Since such elements apt at forming said *"mosaic"* are known *per se,* as well as their overall operation, their description is avoided for simplicity, being understood that at the end of the operation of said handling and ordered collecting group 2, on its surface it is, in fact, formed a succession of said *"mosaics",* each of which, after being formed, is subsequently moved forward to a successive working state so that the surface it occupied on said group 2 can be used to form a successive *"mosaic".*

In correspondence of said handling and ordered collecting group 2 there is arranged a transferring device 11 apt at selectively displacing the containers present on the same group 2 towards and into said multi-flat structure 3, and precisely into one of said hollow spaces 5A, 6A, 7A...

Said transferring device can be made in various ways, and by means of pushers, belts, rollers etc.; furthermore such mechanisms, their mode of operation and their purpose are well known in the art, and therefore they are not included in the present invention and consequently they are not described any further.

In order to lift sequentially said multi-flat structure, there are provided lifting means, not specifically described, apt at lifting selectively and in sequence said whole multi-flat structure 3 at successive levels such that, in said respective levels, one at a time the various said rigid planes 5, 6, 7, 8... are basically at the same level as the upper surface of said group 2, so that when a container is on said group 2, it is possible, through the means comprised in said transferring device 11, to displace said container on said plane (of said open multi-flat frame), which at the moment is at the same level of said group 2.

Furthermore, the apparatus is provided with control and command means apt at activating in a sequential and coordinated way the just described organs so that it is possible to insert in each one of said hollow spaces 5A, 6A, 7A... respective loads or mosaics formed by one or more containers displaced by said transferring device 11 and subsequently to move in height said multi-flat structure 3 so as to present, at the same height of said group 2, a different still empty hollow space, and hence to repeat the loading operation of said new hollow space by activating again the transferring device 11 so as to displace a new load of containers (previously pushed onto said group 2).

In essence, it is possible to load all the hollow spaces with the respective loads of containers, and hence said multi-flat structure 3 becomes and operates as a very efficient storing means to store temporarily and vertically a plurality of loads of containers which have previously been supplied in sequence by said conveyor 1.

That function carried out by said multi-flat structure 3 not only allows to store, in a limited surface corresponding to the base of the multi-flat structure 3, a load that otherwise would require a much larger space (the same as the sum of the spaces occupied by the single loads/mosaics inserted in the various hollow spaces), but above all it avoids engaging, in a continuative way, all the other downstream organs, as it will be described at length later.

Beside said open multi-flat structure 3 there is arranged a horizontal plate 12 basically having the same dimensions of said rigid planes 5, 6, 7, 8... and basically at the same level, or slighter lower than the level wherein said rigid planes 5, 6, 7, 8... are when each one of them is raised at the level of said handling and ordered collecting group 2.

Said plate 12 is comprised in the assembly normally called *"palletizer",* as it will be described later.

At this point it is necessary to completely clarify the following fact: in order to push out the various loads/mosaics from the respective hollow spaces formed in said multi-flat structure 3, different solutions and means are possible; at this operation step, a first solution would be, very simply, to use the same transferring device 11 to push or push out the containers/mosaics from the respective hollow spaces 5A, 6A, 7A...and move them on the plate 12; anyway said function can be achieved not only through said transferring device 11, but through any other means apt at carrying out the same function.

In fact, it has been seen that the control and actuating organs of the device 11 become particularly burdensome under the operating point of view, and mechanically bulky if it is desired to use said transferring device 11 for both functions of:
- initially inserting the mosaics into the respective hollow spaces,
- and then, after having completely "loaded" said structure 3, pushing out the same mosaics and move them on said plate 12.

This inconvenience can be overcome simply providing a suitable pusher means 18, shown in figures from 4 to 7, which, suitably made and controlled, is able of carrying out the function regarding only the expulsion of the mosaics out of the respective hollow spaces and displace them on said plate 12.

Since said pusher 18 is a device known *per se* and easy to realize by the skilled in the art, such device will not be described any further.

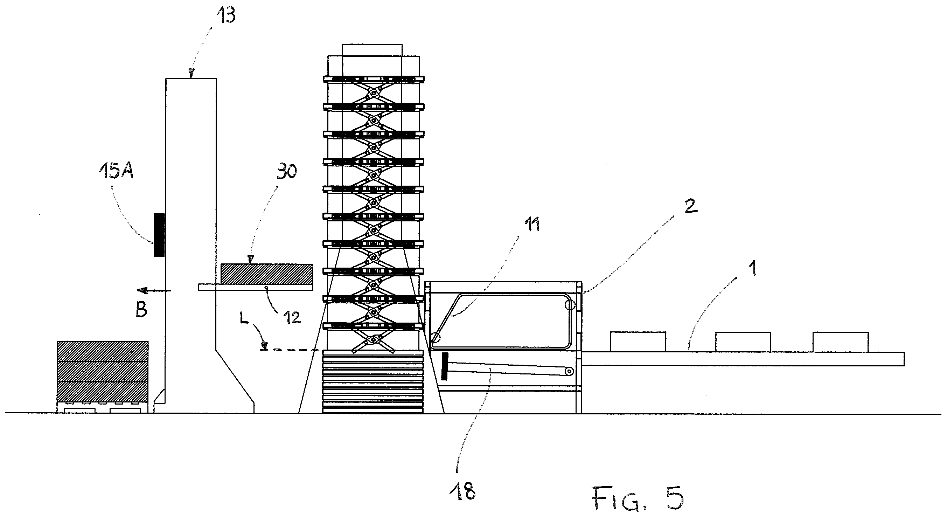

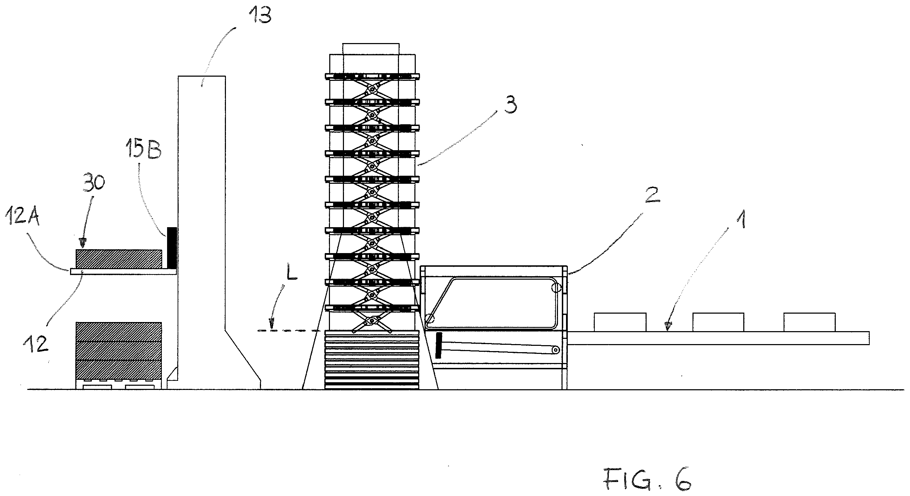

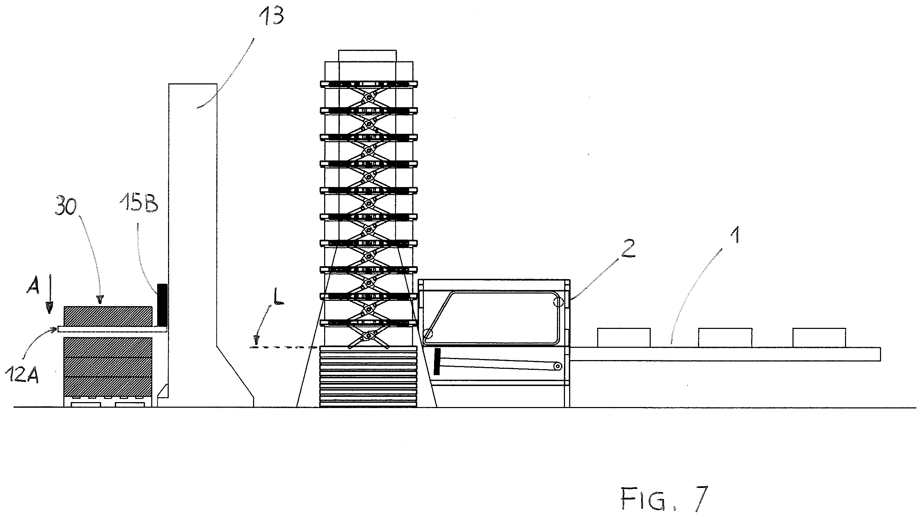

With reference to figures 2 and from 5 to 7, said plate 12 is not fixed, but it is able to further move horizontally and selectively vertically with respect to an articulated frame 13; in particular it is made capable of carrying out the following motions:
- to move horizontally until it places itself vertically (arrow "B", Fig. 5) over an underneath pallet 20,
- to lower or lift itself for a predetermined travel (ARROW "A", Figures 6 and 7) so as to lay or almost on the underneath pallet, if the latter is still empty, or on the load of containers, if the pallet is already partially loaded with them.

Said two motions can be in the shown sequence or in the reverse; what is important is that, with any type of motion, said second plate with its load of containers/mosaics 30 is positioned immediately on the pallet or on the load already placed on it, so as to continue the loading of the pallet with other loads of containers to place on the upper container/mosaic of the already formed stack, or which is being formed on said pallet.

For a reason which will soon be explained, in a position suitably raised with respect to said plate 12 in motion and almost at the outer end 12A of the plate 12 there is arranged a retaining means, ideally a wall 15, which is made able of acquiring two positions, a raised one 15A and a lowered one 15B.

In the first raised position 15A, said wall does not impede either the motion of said plate 12, or the consequent displacement of the load of containers which lean on it, and previously pushed thereon by said pusher 18.

In the second lowered position 15B, said wall 15 is lowered to almost touch said plate 12 from above, but especially it is lowered basically at almost the same level of the load of containers on the same plate 12.

Furthermore, with reference to figures 5, 6 and 7, of course the position of said wall 15 with respect to the plate 12 is that so as to allow that the union of the length of the travel of the plate 12 towards and on the pallet, together with the size and initial position of the load/pallet 30 on said plate 12, is such that, after the travel of the plate 12 on the pallet, as in Figure 6, said wall 15 is located over and in a rear position with respect to the load 30, so as to allow that, if said wall 15 is lowered onto said plate 12, see fig. 7, and the latter is pushed out with a backward motion (see fig. 7), the wall 15 is an obstacle to the motion backward of the load 30 too, which therefore is forced to slide out of the plate 12 and to lay on the underneath pallet, or on the load already placed there.

In particular said wall 15 follows the changing of the level of the plate 12, yet keeping the relative initial position, in the sense that, if said plate 12 lowers, then said wall 15 lowers as well, but keeping its initial height with respect to the plane of the same plate 12.

Anyway, as it will become more apparent later, such constraint lasts only during the motion of the plate 12 when loaded, and it stops after it has placed its load on the pallet or on other containers underneath.

Hence it is also possible to carry out the final loading operation of the load of containers/mosaics placed on said plate 12 moving it first, along said horizontal travel "B", then along said vertical travel "A" (or vice versa, as already said), then to lower said wall 15 to the position 15A, and finally to displace said plate with a backward motion.

In this way it is necessary that, in the raised position 15A, said wall 15 allows the plate 12 and the relative load of containers to pass, and in the subsequent lowered position 15B it prevents the load leaning on the plate 12 from following said plate in its backward motion towards its initial position, that is beside said open structure 3.

After having reached its unloading position (Figure 7) the plate 12 is retracted to start a new cycle, but the load of containers placed thereon cannot follow its backward motion as this is prevented by the opposition of the wall 15 lowered in the position 15A; and therefore, the containers, no longer supported by the plate 12 which is pushed out underneath, slide on the upper surface of said plate 12 until they go beyond its outer edge 12A, by which they are automatically placed on the underneath plane, that can be either the same pallet or a previous load/mosaic of containers already placed on the pallet.

With reference to figures 5, 6 and 7, the first assembly formed by:
- said articulated frame 13,
- said plate 12,
- said wall 15,
- and a pusher 18 if needed,
form a palletizer able to serve and to operate in coordination with the second assembly formed by:
- said mobile conveyor 1
- said handling and ordered collecting group 2 first plate,
- said transferring device 11,
- and said multi-flat structure 3.

Anyway the solution of the multi-flat structure/structures 3 easily generates the problem that the vertical bulk of those structures that could also be very high, and that therefore have to be raised and lowered for a remarkable travel, would require a considerable installation difficulty to assemble said multi-flat structure 3, with considerable overall burdens.

In fact, in case it is desired to access the hollow spaces arranged in the higher positions, it would be necessary to lower the same structure by an equivalent height, which would most likely imply also a hole to house said structure when the latter is completely lowered.

In order to avoid this inconvenience, and with reference to figures 2 to 10, said structure is formed so that it is possible to reduce the height of each hollow space considerably; such characteristic can be achieved making said vertical posts not like rigid poles, but like a plurality of pairs of arms inclinable one another with respect to a respective common pivot, wherein each pair of said arms joins a corner of each plane to the corresponding (vertically) corner of the plane above.

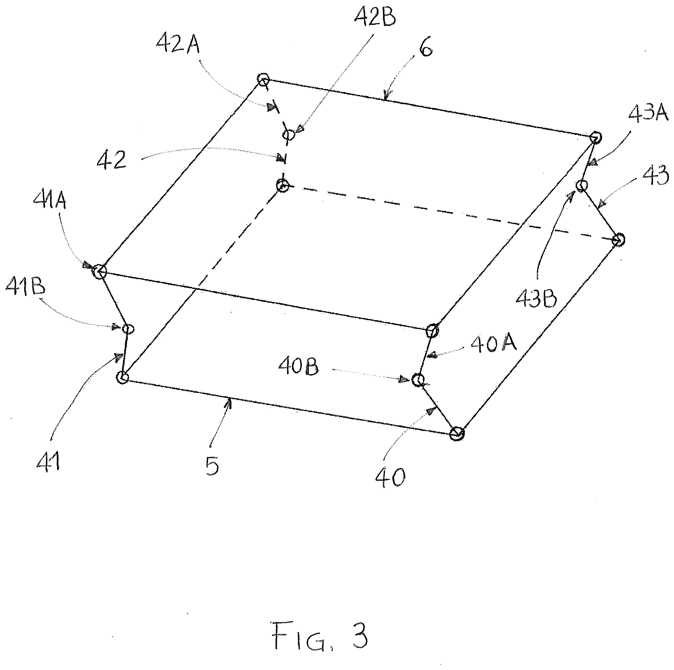

For exemplification only, and with reference to figure 3, there are shown the two planes 5 and 6, which are joined by four pairs of arms 40, 40A, --- 41, 41A, --- 42, 42A, --- and 43, 43A where the common ends of the arms of each pair are interconnected by the respective pivots, 40B, 41B, 42B and 43B.

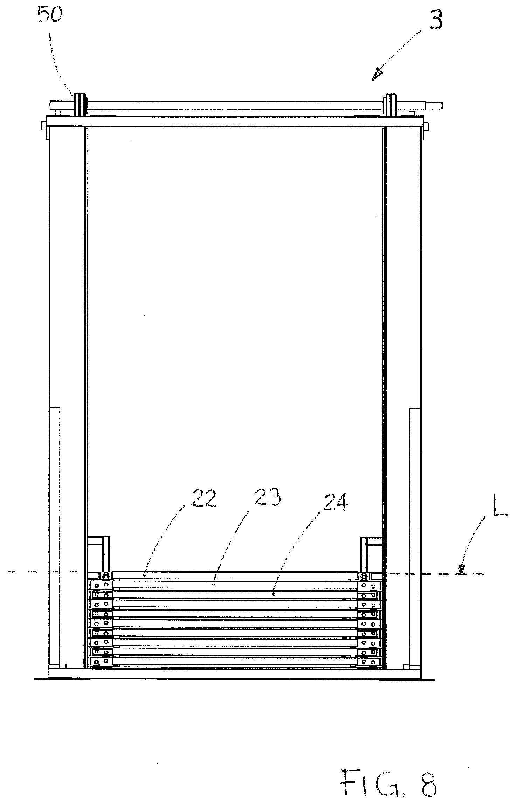

Of course such construction is repeated in the same way for all the pairs of adjacent planes, so as to achieve the configuration clearly shown in figures 8, 9 and 10.

Therefore all said planes are made and connected so as to be both separate, condition which forms respective said hollow spaces, and basically laying one on the other, condition which forms the lowest vertical dimension of the whole structure.

In this way it has an "accordion-like" type or "folding" configuration, as it can easily be verified observing together figures 8, 9 and 10.

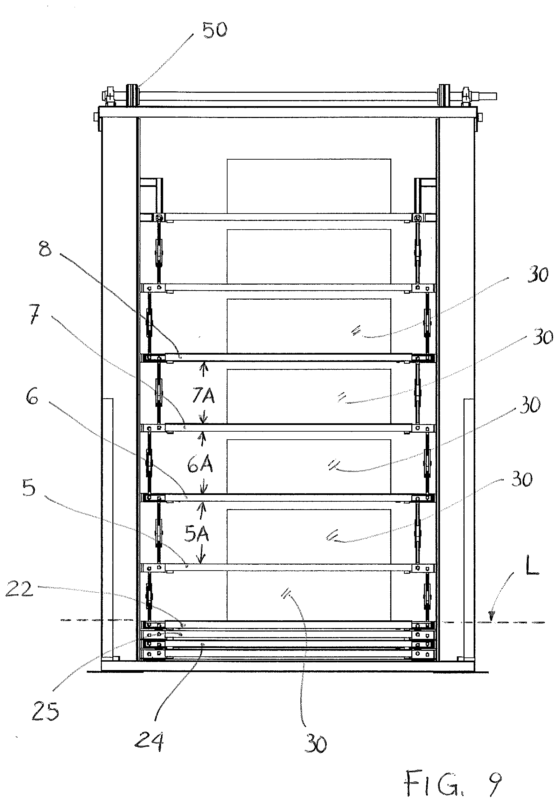

Let's refer to figures 8 and 9: normally said structure is formed and arranged folded, that is its height occupies the minimum space; in this state the single planes 5, 6, 7, 8... almost completely correspond one to the other, and the respective hollow spaces are basically eliminated.

Let's arrange high on said structure lifting/lowering means 50 which, suitably engaged on the upper part of the structure and, suitably controlled, are capable of lifting progressively and in sequence the first upper plane, and after that the successive lower plane, and so on; to lift one by one all the planes so as to open the respective hollow spaces.

Figure 9 shows an intermediate arrangement of such structure, wherein only the planes 5, 6, 7, 8... arranged on the upper part at a level "L" are separate one from the other so as to realize one with the other the respective hollow spaces, whereas the planes 22, 23, 24..., arranged lower than level "L", are basically flattened one on the other and therefore basically they do not occupy any space vertically.

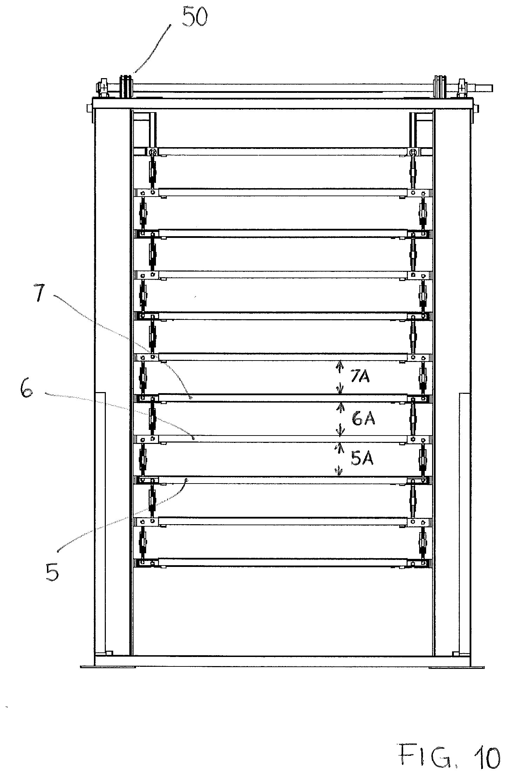

On the contrary, when said structure is completely opened, it is as in figure 10, wherein it reaches its maximum height, but also it has all the respective hollow spaces in an "open" arrangement, and hence it has the maximum capacity to house the greatest number of loads in the respective hollow spaces and therefore it offers the best performance as a temporary storage (BUFFER).

Of course, the dimensions and geometry of the described elements have to be such that, starting from the initial moment, with said structure completely contracted and shortened on the bottom, said hollow spaces open one after the other and all of them at the same level "L", as shown in figure 9, where said level is exactly at the level of said group 2, which also corresponds to about the initial level of said plate 12.

How to realize the devices and means so that the planes 5, 6, 7... 22, 23, 24..., are reciprocally moved away and approached can be easily inferred and used from the prior art, and hence they do not belong to the present invention.

It only has to be taken into consideration that, just due to the fact that said structure 3 is opened starting from the upper hollow space, and one by one all the other lower hollow spaces are successively opened, it will result that, obviously, when all the hollow spaces of said multi-flat structure 3 are loaded with the respective loads, then necessarily the lower hollow space will be at the level of both said group 2 and said plate 12.

At this point, in order not to change the vertical position of said structure, it will be suitable and consistent to start the unloading of the various loads of containers just starting from the last load inserted, and that is from the load which is in the lowest hollow space.

And hence from this moment on, after the load/mosaic 30 has been pushed out, by the known means, such as, but not necessarily, said pusher 18, the respective hollow space that at that moment is at its same level, said structure 3 is lowered by a step, that is the hollow space that was previously above the just unloaded hollow space is brought to the level of the pusher 18, and so on until the complete unloading of all the hollow spaces and until the multi-flat structure 3 has the arrangement shown in figure 8, wherein all the hollow spaces are, in fact, pressed and therefore annulled as the respective planes become adjacent one to the other.

Having so defined the apparatus of the invention, it will now be synthetically described its typical operation.

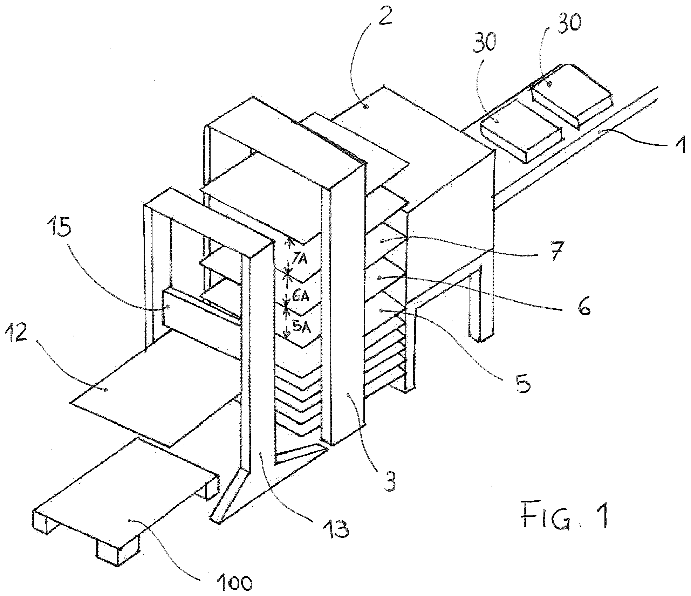

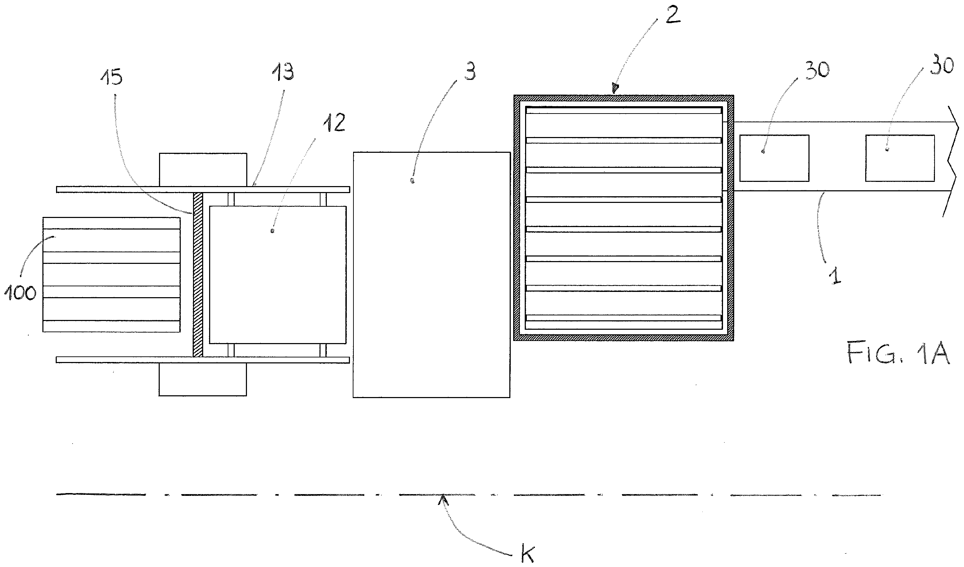

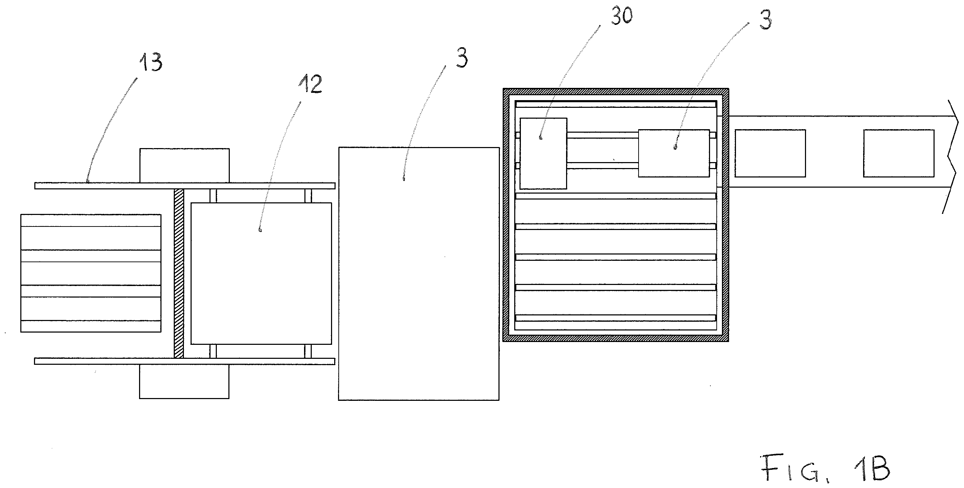

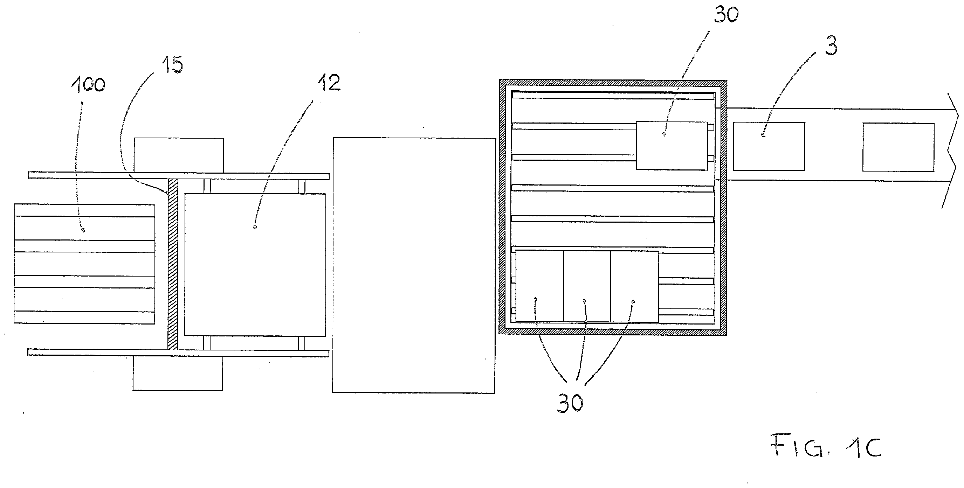

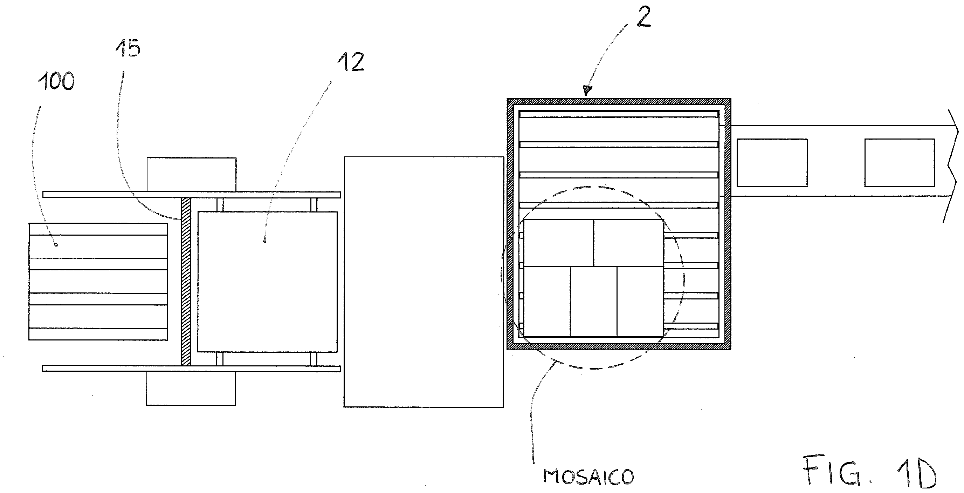

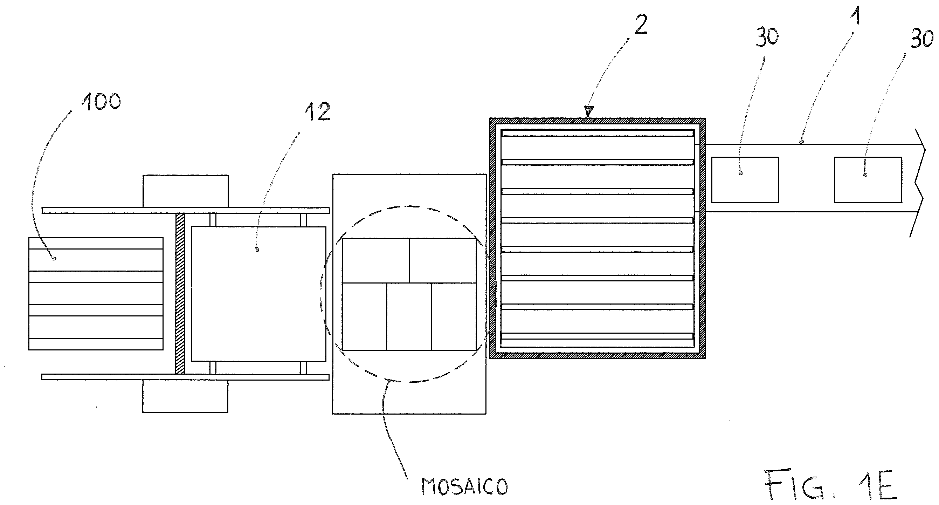

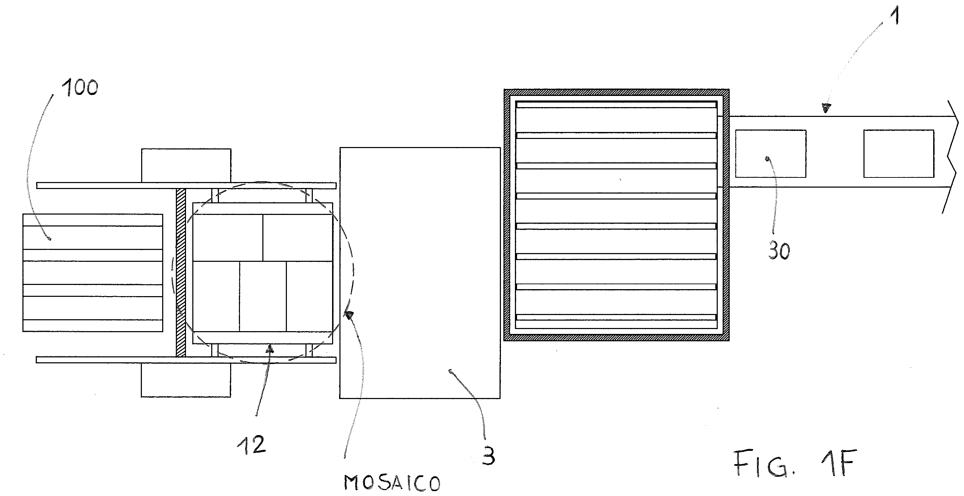

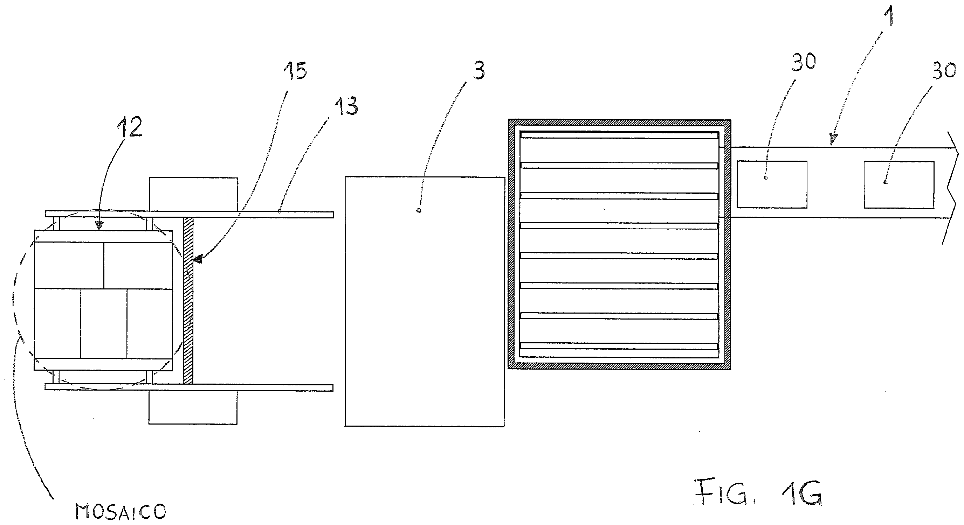

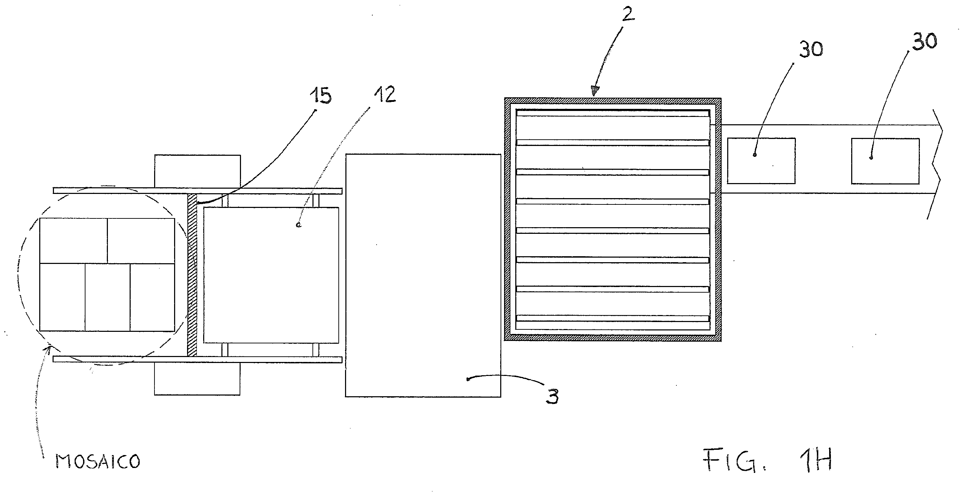

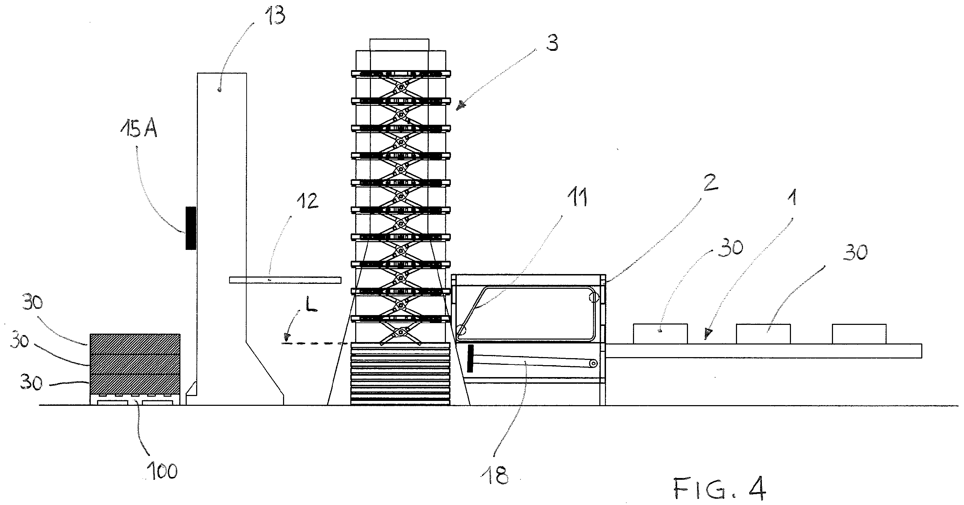

Suitable control and command means, and the just described organs, are made capable of cyclically carrying out the following sequence of operations:
a) activation of said handling and ordered collecting group 2 so that more successive containers are displaced and placed to form a sole mosaic leaning on said group 2; anyway, this technique is completely known and it will not be described any further, SEE Figures 1A, 1B, 1C, 1D;
b) activation of said transferring device 11 so as to displace said container 30 into the hollow space which lies at the same level of said group 2;
c) raising of said open multi-flat structure 3 so that the subsequent lower hollow space opens upward and is positioned at the same level of the upper surface of said group 2, see Figure 4;
d) activation according to the previous steps from a) to c) until all or a predefined part of said hollow spaces is loaded;
   After said open multi-flat structure has been loaded in said hollow spaces, as pre-determined,
e) activation of said pusher 18 so that a container or a mosaic, is pushed out from the respective hollow space towards and on said plate 12; as explained above, it is preferred that the first hollow space to be "emptied" is the lower hollow space, see Figure 1F, Figure 5;
f) horizontal displacement of said second plate 12 so that it is moved over a respective pallet 20, as symbolically shown in Figure 1G and Figure 6;
g) lowering and/or possible raising of said plate 12 to a pre-determined level, see Figure 7;
h) lowering of said wall 15 so as to oppose itself to the backward motion of the container at that time placed on said plate 12, see Figure 7;
i) backward displacing of said plate 12 and successive raising/lowering so that it returns back to its initial position, see Figure 1H;
j) raising of said wall 15 to its not interfering initial position;
k) raising of said multi-flat structure 3 until the successive and upper hollow space is brought to the level of said upper plane of said group 2, repetition of the previous steps from e) to k) for a pre-determined number of cycles.

It is to note that normally the various mosaics are loaded in succession on the same pallet until the load final height is at a level lower than the second plate 12, so that the latter has necessarily to lower, a little or a lot, in order to get to the level of the upper mosaic of the stack already arranged on the pallet, on which upper mosaic the plate itself has to unload the mosaic it is displacing at the moment; anyway it is possible that at a given moment said stack is already at a level higher than the level of said second plate 12; of course in that case the operations have to be reversed, and that is said plate 12 first has to raise up to the upper level of the stack, and only after having reached such level it displaces itself horizontally in order to be over the stack.

Therefore in this second case the operations shown at the previous points f) and g) have to be reversed.

As the skilled in the art has already understood, some of the above described steps can also be carried out not necessarily in the identical described order.

In fact, just as it is a question of activating different organs that can operate in *"masked time"* it will be possible that some steps are anticipated without affecting the successive steps; for example it is possible that, after the load has been pushed out from the respective hollow space and is already on the plate 12, the structure 3 can already place itself so as to present a new hollow space, ready to be emptied, before said group 2 and respective transferring device 11, even if the just displaced load has not been laid on the final pallet yet.

Since there can be different embodiments, but basically equivalent under the point of view of the desired result, these technical equivalents, well conceivable by the skilled in the art, will not be described any further.

In particular it has to be seen that, until the multi-flat structure 3 has not been completely loaded (or loaded up to a pre-determined level), and hence the previous steps from a) to d) have not been carried out completely, the successive steps from e) on do not have to be carried out since clearly it is not possible, in the same time interval, to carry out both the loading of the structure 3, through the steps from a) to d), and its unloading, through the steps from step e) on.

As well, it is also possible that said group 2 forms a new mosaic before the structure 3 places itself at a new level in order to receive this new mosaic.

Of course, other examples can be given but the skilled in the art is certainly capable of determining easily all the possible ways and therefore, a detailed listing is avoided.

Said first assembly or palletizer is known *per se* and widely used in the art, and therefore it is not part of the invention; anyway it has been described in order to understand in general all the main operating organs of the apparatus of the invention.

Anyway, if such palletizer were stable and fixed, it would occur that it could operate only with said second assembly as previously defined, and which comprises:
- said mobile conveyor 1,
- said handling and ordered collecting group 2,
- said transferring device 11,
- and said multi-flat structure 3.

And hence, if it were desired to work and palletize also containers coming from other conveyors, different from the conveyor 1 considered so far, of course it would be necessary to provide other respective palletizers, which would imply a remarkable constructive complication and above all a huge increase of costs.

Examining attentively the workload on the palletizer, this increase of costs shows to be basically unnecessary and mainly inefficient as it can be seen that the palletizer operates only for a very small fraction of the available time, having to wait that the single loads of containers 30 coming from the conveyor 1 arrive at a pace much slower than the operation and loading speed of the palletizer.

And hence the palletizer remains waiting, and therefore stationary, and ultimately economically inefficient, for most part of the available time.

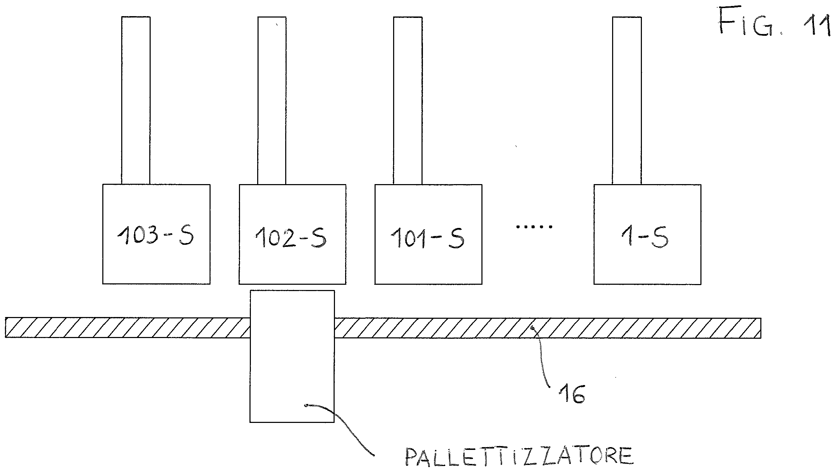

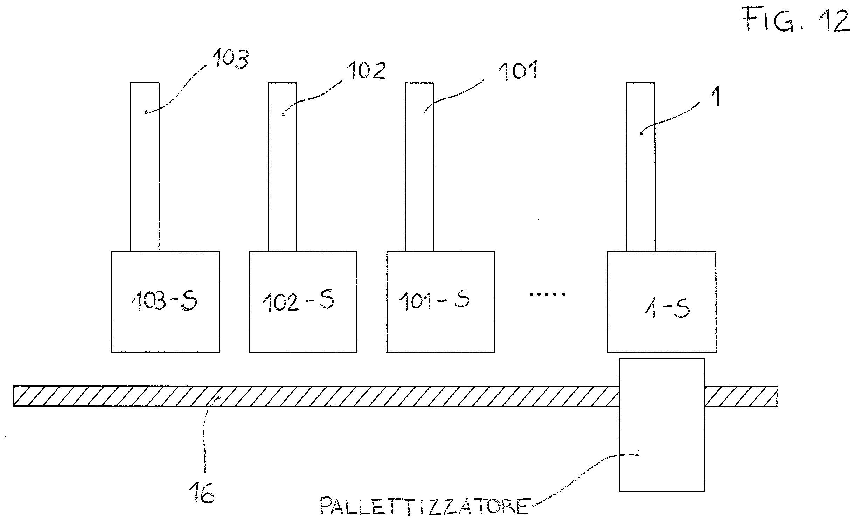

The present invention therefore solves this great inconvenience, since, with reference to figures 11 and 12, an advantageous improvement of the invention, in an apparatus comprising more distinct mobile conveyors 1, 101, 102, 103... and having an independent mode of operation, and associated to respective second assemblies 1-S, 101-S, 102-S, 103-S...as previously defined, it consists in eliminating each single palletizer integrated with each mobile conveyor, and in using one sole palletizer which is made mobile, in the sense that it is provided with means, known *per se,* such as guides, rails etc... 16 able of moving it towards other second assemblies, operatively similar to the just described second assembly. These second assemblies too are integrated to a respective said mobile distinct conveyor 1, 101, 102, 103...whereon are loaded containers also of a different type and of course variable both in size and load, a handling and ordered collecting group 2, a transferring device 11, and a respective multi-flat structure, with which it integrates operatively and temporarily.

In this way the present advantageous improvement envisages to store as in a temporary "buffer" all the containers coming from a sole conveyor yet without engaging a respective palletizer rigidly associated to that conveyor; in fact, the described palletizer becomes a sole one as it can be programmed and controlled so as to be moved and in the meantime work with other second assemblies (defined before), which optimizes its construction and its use; basically it is realised the integrated operation mode known as *"masked time"* well known in other sectors and which, therefore, will not talked about.

Hence this improvement, which consists in associating a single palletizer to a plurality of different assemblies, each comprising a respective conveyor, allows to achieve the very important advantage of using the same palletizer to palletize, on different pallets, all the containers coming from respective and different conveyors.

And this fundamental improvement is, in fact, based on the fact that a sole palletizer can be moved from any second assembly, wherein the loading of the respective multi-flat structure 3 is being carried out, to another second assembly wherein the loading of the respective multi-flat structure has already been completed, where therefore it becomes possible to carry out the loading function of the respective pallet according to the above described method, while in the other second assemblies it is carried out and completed the loading of the respective and successive loads of containers coming from the respective conveyors.

Hence the fundamental object of the invention is achieved, since, in fact, it can be used a sole palletizer to load the containers coming from different conveyors, and at the same time the feeding of the containers from the single conveyors is not affected not even slowed down in any way since the single containers, when in the unloading area, are temporarily loaded in the respective multi-flat structure, waiting to be loaded on the respective pallet, in sequence and without undesired waiting time.

A further fundamental improvement, essential for the best utilization of the invention, consists in the following:
if the functional organs of such apparatus comprising:
- distinct mobile conveyors 1, 101, 102, 103...,
- all the respective second assemblies 1-S, 101-S, 102-S, 103-S...,
- the respective transferring devices 11 (for brevity the corresponding ones of the other assemblies are not identified),
- possible and respective said unloading third pushers 18,
and furthermore the described organs of said sole palletizer, and the means apt at moving it on said guides, rails, etc 16, so as to functionally and selectively associate it to said second assemblies 1-S, 101-S, 102-S, 103-S...are suitably associated and connected to a single command and control system, and if such system is suitably programmed, it becomes possible and immediate to control and command all the functions of such apparatus in a coordinated, automatic and coherent way according to the different variables that may occur and that have to be appropriately taken into consideration and planned, and that is of the loading of pallets with containers which therefore can be different:
- in size,
- in the frequency of arrivals on their respective conveyor,
- in the type of pallet
- in the load height on each single pallet, or in the number of layers of containers that have to be loaded on each single pallet of a pre-determined type, of course, everything can change over time.

## Claims

1. Apparatus for loading a plurality of containers (30), particularly containing vegetable products, on pallets, comprising:
- a first assembly consisting of a palletizer comprising an articulated frame (13) and a plate (12),
- at least a second assembly comprising a conveyor (1) having a horizontal motion, a handling and collecting group (2), a transferring device (11, 18) and an open multi-flat structure (3),
- said handling and collecting group (2) being arranged downstream said conveyor (1) and being provided with a leaning plane able of supporting one or more containers (30) transferred in sequence by said conveyor (1), said handling and collecting group (2) being provided with suitable means adapted to arrange said one or more containers to form, in succession, one or more mosaics of containers,
- temporary vertically storing means comprising said open multi-flat structure (3) being arranged substantially adjacent to said handling and collecting group (2) and being able of accumulating into a vertical standing, for a pre-determined quantity, said mosaics of containers (30), and successively of transferring them in sequence and singularly towards and into said palletizer, said transferring device (11, 18) being adapted to displace in sequence said mosaics of containers (30) from said handling and collecting group (2) to said open multi-flat structure (3) into one of hollow spaces (5A,6A,7A) and from said respective hollow spaces to said palletizer, said open multi-flat structure (3) consisting of:
- a plurality of basically similar leaning planes (5, 6, 7, 8, 22, 23, 24) placed vertically one by one, and separated by said respective hollow spaces (5A, 6A, 7A),
- lifting/lowering means (50) able of vertically displacing the position of said leaning planes (5, 6, 7, 8, 22, 23, 24) to a plurality of selectively defined levels and in a selectively controllable sequence, wherein at each level a defined of said hollow spaces is so arranged in height substantially to the same level of said leaning plane of said handling and collecting group (2),
said first assembly being adapted to serve and to operate in coordination with said at least a second assembly,
wherein
- said plate (12) is arranged beside said open multi-flat structure (3),
- said articulated frame (13) is able of selectively conveying with horizontal and vertical motion said plate (12),
- said transferring device comprising a pusher (18) able of transferring, in sequence, said mosaics of containers (30) out from the respective hollow spaces they are lodged in, towards and on said plate (12), said palletizer further comprising retaining means consisting of a vertical wall (15), combined with said plate (12) and able of being placed selectively into two positions, wherein in a first raised position (15A) it is able of leave said mosaics of containers, laying on said plate (12), to pass on, and in a second position (15B) it is lowered basically at the same level of said plate (12), wherein said open multi-flat structure comprises a plurality of vertical posts (40, 40A, 41, 41A, 42, 42A, 43, 43A) which are able of selectively being shortened so that said leaning planes (5, 6, 7, 8, 22, 23, 24), arranged in an ordered succession, are substantially and reciprocally approached moving from an initial separation position and re-stretched so that said leaning planes (5, 6, 7, 8, 22, 23, 24) are again spaced from each other until getting back said initial position so that the height of the respective said hollow spaces (5A, 6A, 7A) is remarkably reduced, said lifting/lowering means (50) being able of implementing the raising of said leaning planes (5, 6, 7, 8, 22, 23, 24) in sequence starting from the upper plane, so that said hollow spaces (5A, 6A, 7A) are opened in sequence starting from the upper hollow space, and of implementing their lowering starting from the lower leaning plane, so that said hollow spaces (5A, 6A, 7A) are closed in sequence starting from the lower hollow space.

2. Apparatus according to claim 1, **characterized in that** it is able of operating according to the following modes, also in a not consecutive mode:
i. activation of said handling and collecting group (2) so to arrange on it one or more successive containers (30),
ii. activation of said transferring device (11) to displace said one or more containers (30) into the hollow space which lies at the same level of the upper plane of said handling and collecting group (2),
iii. raising of said open multi-flat structure (3) so that the lower hollow space is positioned at the same level of the upper plane of said handling and collecting group (2),
iv. further operation according to the previous steps from i. to iii. until all or a predefined part of said hollow spaces are loaded,
v. activation of said pusher (18) so that one or more containers are pushed out from the respective hollow space towards and on said plate (12),
vi. horizontal displacement of said plate (12) so that it is moved over a respective pallet (100),
vii. lowering/raising of said plate (12) to pre-determined level,
viii. lowering of said retaining means or wall (15),
ix. backward displacing of said plate (12) and successive return back to its initial position,
x. raising of said retaining means or wall (15) to its initial position,
xi. raising of said open multi-flat structure (3) until the successive and upper hollow space is brought to the level of said the upper plane of said handling and collecting group (2),
xii. further operation according to the previous steps from v. to xi. for a predetermined number of cycles.

3. Apparatus according to claim 2, comprising a plurality of said second assemblies, wherein said palletizer is adapted to operate selectively with said second assemblies and is provided with means able of moving it selectively towards one of said distinct second assemblies.

## Patentansprüche

1. Vorrichtung zum Laden einer Vielzahl von Behältern (30), die insbesondere Gemüseprodukte enthalten, auf Paletten, umfassend:
- eine erste Anordnung, die aus einem Palettierer besteht, der einen Gelenkrahmen (13) und eine Platte (12) umfasst,
- wenigstens eine zweite Anordnung, die einen Förderer (1) mit einer horizontalen Bewegung, eine Handhabungs- und Sammelgruppe (2), eine Transporteinrichtung (11, 18) und einen offenen Mehrebenenaufbau (3) umfasst,
- wobei die Handhabungs- und Sammelgruppe (2) stromabwärts von dem Förderer (1) angeordnet ist und mit einer geneigten Fläche versehen ist, die einen oder mehrere Behälter (30), die in einer Reihenfolge durch den Förderer (1) transportiert werden, halten kann, wobei die Handhabungs- und Sammelgruppe (2) mit geeigneten Einrichtungen zum Anordnen des einen oder der mehreren Behälter für das aufeinanderfolgende Formen eines oder mehrerer Mosaike von Behältern versehen ist,
- eine Temporär/Vertikal-Speichereinrichtung, die den offenen Mehrebenenaufbau (3) umfasst, der im Wesentlichen neben der Handhabungs- und Sammelgruppe (2) angeordnet ist und die Mosaike von Behältern (30) zu einer vertikalen Stellung für eine vorbestimmte Menge akkumulieren kann und sie in einer Reihenfolge jeweils einzeln zu und in den Palettierer transportieren kann, wobei die Transporteinrichtung (11, 18) ausgebildet ist zum Verschieben der Mosaike von Behältern (30) in einer Reihenfolge von der Handhabungs- und Sammelgruppe (2) zu dem offenen Mehrebenenaufbau (3) in einen von mehreren hohlen Räumen (5A, 6A, 7A) und von den entsprechenden hohlen Räumen zu dem Palettierer, wobei der offene Mehrebenenaufbau (3) besteht aus:
- einer Vielzahl von im Wesentlichen ähnlichen geneigten Flächen (5, 6, 7, 8, 22, 23, 24), die vertikal übereinander platziert sind und durch die entsprechenden hohlen Räume (5A, 6A, 7A) getrennt sind,
- einer Hebe-/Senkeinrichtung (50), die die Position der geneigten Flächen (5, 6, 7, 8, 22, 23, 24) zu einer Vielzahl von wahlweise definierten Ebenen und in einer wahlweise steuerbaren Reihenfolge versetzen kann, wobei auf jeder Ebene ein definierter der hohlen Räume in der Höhe im Wesentlichen auf der gleichen Ebene wie die geneigte Fläche der Handhabungs- und Sammelgruppe (2) angeordnet ist,
wobei die erste Anordnung ausgebildet ist für einen Betrieb in Koordination mit wenigstens einer zweiten Anordnung,
wobei:
- die Platte (12) neben dem offenen Mehrebenenaufbau (3) angeordnet ist,
- der Gelenkrahmen (13) die Platte (12) wahlweise mit einer horizontalen und einer vertikalen Bewegung transportieren kann,
- die Transporteinrichtung einen Schieber (18) umfasst, der die Mosaike von Behältern (30) aus den entsprechenden hohlen Räumen, in denen sie aufgenommen sind, zu und auf die Platte (12) transportieren kann.
wobei der Palettierer eine Halteeinrichtung umfasst, die aus einer mit der Platte (12) kombinierten vertikalen Wand (15) besteht und wahlweise an zwei Positionen platziert werden kann, wobei sie in einer ersten gehobenen Position (15A) die auf der Platte (12) liegenden Mosaike von Behältern lassen kann, sodass diese passieren, und in einer zweiten Position (15B) im Wesentlichen zu der gleichen Ebene wie die Platte (12) gesenkt ist, und
wobei der offene Mehrebenenaufbau eine Vielzahl von vertikalen Pfosten (40, 40A, 41, 41A, 42, 42A, 43, 43A) umfasst, die wahlweise verkürzt werden können, sodass die geneigten Flächen (5, 6, 7, 8, 22, 23, 24), die in einer geordneten Reihenfolge angeordnet sind, von einer anfänglichen Trennungsposition wesentlich aneinander angenähert werden, und erneut verlängert werden können, sodass die geneigten Flächen (5, 6, 7, 8, 22, 23, 24) wieder voneinander beabstandet werden, bis sie zurück zu der anfänglichen Position gelangen, sodass die Höhe der entsprechenden hohlen Räume (5A, 6A, 7A) beträchtlich verkleinert wird, wobei die Hebe-/Senkeinrichtung (50) befähigt ist zum Implementieren des Hebens der geneigten Flächen (5, 6, 7, 8, 22, 23, 24) in einer an der obersten Fläche beginnenden Reihenfolge, sodass die hohlen Räume (5A, 6A, 7A) in einer an dem obersten hohlen Raum beginnenden Reihenfolge geöffnet werden, und zum Implementieren des Senkens an der untersten geneigten Fläche beginnend, sodass die hohlen Räume (5A, 6A, 7A) in einer an dem untersten hohlen Raum beginnenden Reihenfolge geschlossen werden.

2. Vorrichtung nach Anspruch 1, **dadurch gekennzeichnet, dass** die Vorrichtung gemäß den folgenden Modi betrieben werden kann, wobei die Modi nicht aufeinander folgen müssen:
i. Aktivieren der Handhabungs- und Sammelgruppe (2), um auf ihr einen oder mehrere aufeinander folgende Behälter (30) anzuordnen,
ii. Aktivieren der Transporteinrichtung (11), um den einen oder die mehreren Behälter (30) in den hohlen Raum zu verschieben, der auf der gleichen Ebene wie die oberste Fläche der Handhabungs- und Sammelgruppe (2) liegt,
iii. Heben des offenen Mehrebenenaufbaus (3), sodass der unterste hohle Raum auf der gleichen Ebene wie die oberste Fläche der Handhabungs- und Sammelgruppe (2) positioniert ist,
iv. weiteres Betreiben gemäß den vorstehenden Schritten i bis iii, bis alle oder ein vordefinierter Teil der hohlen Räume beladen sind,
v. Aktiveren des Schiebers (18), sodass ein oder mehrere Behälter aus den entsprechenden hohlen Räumen zu und auf die Platte (12) geschoben werden,
vi. horizontales Verschieben der Platte (12), sodass sie über eine entsprechende Palette (100) bewegt wird,
vii: Heben/Senken der Platte (12) zu einer vorbestimmten Ebene,
viii: Senken der Halteeinrichtung oder Wand (15),
ix. Rückwärtsverschieben der Platte (12) und darauffolgendes Zurückkehren zu der anfänglichen Position,
x. Heben der Halteeinrichtung oder Wand (15) zu ihrer anfänglichen Position,
xi. Heben des offenen Mehrebenenaufbaus (3), bis der folgende und oberste hohle Raum zu der Ebene der obersten Fläche der Handhabungs- und Sammelgruppe (2) gebracht wird,
xii. weiteres Betreiben gemäß den vorstehenden Schritten v bis xi für eine vorbestimmte Anzahl von Zyklen.

3. Vorrichtung nach Anspruch 2, umfassend:
eine Vielzahl der zweiten Anordnungen, wobei der Palettierer ausgebildet ist für einen wahlweisen Betrieb mit den zweiten Anordnungen und mit Einrichtungen versehen ist, die befähigt sind zum Bewegen des Palettierers wahlweise zu einer der distinkten zweiten Anordnungen.

## Revendications

1. Appareil de chargement sur palettes d'une pluralité de conteneurs (30), notamment contenant des produits végétaux, comprenant :
- un premier assemblage consistant en un palettiseur comprenant un châssis articulé (13) et une plaque (12),
- au moins un deuxième assemblage comprenant un convoyeur (1) à mouvement horizontal, un groupe de manutention et de collecte (2), un dispositif de transfert (11, 18) et une structure multi-étages ouverte (3),
- ledit groupe de manutention et de collecte (2) étant disposé en aval dudit convoyeur (1) et étant pourvu d'un plan d'inclinaison apte à supporter un ou plusieurs conteneurs (30) transférés en séquence par ledit convoyeur (1), ledit groupe de manutention et de collecte (2) étant pourvu de moyens appropriés adaptés pour organiser ledit un ou plusieurs conteneurs (30) à former, successivement, une ou plusieurs mosaïques de conteneurs,
- des moyens de stockage vertical temporaires comprenant ladite structure multi-étages ouverte (3) étant disposée sensiblement adjacente audit groupe de manutention et de collecte (2) et étant apte à accumuler en une position verticale, pour une quantité prédéterminée, lesdites mosaïques de conteneurs (30), et successivement à les transférer en séquence et individuellement vers et dans ledit palettiseur, ledit dispositif de transfert (11, 18) étant apte à déplacer en séquence lesdites mosaïques de conteneurs (30) du groupe de manutention et de collecte (2) vers ladite structure multi-étages ouverte (3) dans un parmi des espaces creux (5A, 6A, 7A) et desdits espaces creux respectifs vers ledit palettiseur, ladite structure multi-étages ouverte (3) consistant en :
- une pluralité de plans d'inclinaison fondamentalement similaires (5, 6, 7, 8, 22, 23, 24) placés verticalement un par un et séparés par lesdits espaces creux respectifs (5A, 6A, 7A),
- des moyens de levage / abaissement (50) capables de déplacer verticalement la position desdits plans d'inclinaison (5, 6, 7, 8, 22, 23, 24) vers une pluralité de niveaux définis sélectivement et dans une séquence pouvant être contrôlée sélectivement, dans lequel à chaque niveau une définition desdits espaces creux est ainsi disposée en hauteur sensiblement au même niveau dudit plan d'inclinaison dudit groupe de manutention et de collecte (2),
ledit premier assemblage étant capable de servir et d'opérer en coordination avec ledit au moins deuxième assemblage,
dans lequel
- ladite plaque (12) est disposée à côté de ladite structure multi-étages ouverte (3),
- ledit châssis articulé (13) est apte à convoyer sélectivement en mouvement horizontal et vertical ladite plaque (12),
- ledit moyen de transfert comprenant un poussoir (18) apte à transférer, en séquence, lesdites mosaïques de conteneurs (30) des espaces creux respectifs dans lesquels ils sont logés, vers et sur ladite plaque (12),
ledit palettiseur comprenant en outre des moyens de retenue consistant en une paroi verticale (15),
combinés avec ladite plaque (12) et pouvant être placés sélectivement dans deux positions, dans lesquelles dans une première position relevée (15A) elle est capable de laisser passer lesdites mosaïques de conteneurs (30), posées sur ladite plaque (12), et dans une deuxième position (15B) elle est abaissée essentiellement au même niveau que ladite plaque (12), dans lequel ladite structure multi-étages ouverte comprend une pluralité de montants verticaux (40, 40A, 41, 41A, 42, 42A, 43, 43A) qui peuvent être sélectivement raccourcis de sorte que lesdits plans d'inclinaison (5, 6, 7, 8, 22, 23, 24), disposés en succession ordonnée, sont rapprochés sensiblement et réciproquement en se déplaçant à partir d'une position de séparation initiale, et re-étirés de sorte que lesdits plans d'inclinaison (5, 6, 7, 8, 22, 23, 24) soient à nouveau espacés les uns des autres jusqu'à revenir dans ladite position initiale de sorte que la hauteur desdits espaces creux respectifs (5A, 6A, 7A) est remarquablement réduite,
lesdits moyens de levage / abaissement (50) étant capables de réaliser l'élévation desdits plans d'inclinaison (5, 6, 7, 8, 22, 23, 24) en séquence à partir du plan supérieur , de sorte que les espaces creux (5A, 6A, 7A) sont ouverts en séquence à partir de l'espace creux supérieur, et de réaliser leur abaissement à partir du plan d'inclinaison inférieur, de sorte que lesdits espaces creux (5A, 6A, 7A) sont fermés en séquence à partir de l'espace creux inférieur.

2. Appareil selon la revendication 1, **caractérisé en ce qu'**il est capable de fonctionner selon les modes suivants, également dans un mode non consécutif :
i. activation dudit groupe de manutention et de collecte (2) pour y disposer un ou plusieurs conteneurs (30) successifs,
ii. activation dudit dispositif de transfert (11) pour déplacer lesdits un ou plusieurs conteneurs (30) dans l'espace creux qui se trouve au même niveau du plan supérieur dudit groupe de manutention et de collecte (2),
iii. élévation de ladite structure multi-étages ouverte (3) de sorte que l'espace creux inférieur est positionné au même niveau du plan supérieur dudit groupe de manutention et de collecte (2),
iv. poursuite de l'opération selon les étapes précédentes de i. à iii. jusqu'à ce que tout ou une partie prédéfinie desdits espaces creux soit chargé,
v. activation dudit poussoir (18) de sorte qu'un ou plusieurs conteneurs soient poussés hors de l'espace creux respectif vers et sur ladite plaque (12),
vi. déplacement horizontal de ladite plaque (12) de sorte qu'elle soit déplacée sur une palette respective (100),
vii. abaissement / élévation de ladite plaque (12) à un niveau prédéterminé,
viii. abaissement desdits moyens de retenue ou paroi (15),
ix. déplacement vers l'arrière de ladite plaque (12) et retour successif à sa position initiale,
x. élévation dudit moyen de retenue ou paroi (15) jusqu'à sa position initiale,
xi. élévation de ladite structure multi-étages ouverte (3) jusqu'à ce que l'espace creux successif et supérieur soit amené au niveau dudit plan supérieur dudit groupe de manutention et de collecte (2),
xii. poursuite de l'opération selon les étapes précédentes de v. à xi. pour un nombre prédéterminé de cycles.

3. Appareil selon la revendication 2, comprenant une pluralité desdits deuxièmes assemblages, dans lequel ledit palettiseur est agencé pour opérer sélectivement avec lesdits deuxièmes assemblages et est pourvu de moyens aptes à le déplacer sélectivement vers un desdits deuxièmes assemblages distinct.
